# EUROPEAN PATENT APPLICATION

(11) **EP 2 422 875 A1**
(43) Date of publication of application: **29.02.2012**
(21) Application number: 11178019.3
(22) Date of filing: 18.08.2011
(51) Int. Cl.: B01J 21/12, B01J 37/00, B01J 37/03, B01J 35/10, C10L 1/00

(54) **Method of manufacturing a catalyst and method for preparing fuel from renewable sources using the catalyst**

(30) Priority: 31.08.2010 US 873019
(71) Applicant: General Electric Company, Schenectady, NY 12345 (US)
(72) Inventor: Derr, Daniel Lawrence, Niskayuna, NY 12309 (US); Lewis, Larry Neil, Niskayuna, NY 12309 (US); Keshavan, Hrishikesh, Niskayuna, NY 12309 (US); Deluga, Gregg Anthony, Niskayuna, NY 12309 (US)
(74) Representative: Szary, Anne Catherine

(57) **Abstract**

A method of forming a catalyst is provided. The method comprises reacting a reactive solution comprising at least one alumina precursor, at least one silica precursor, a templating agent, a solvent, a catalytic metal precursor, and a modifier, to form a gel. The method can also include calcining the gel to form a catalyst composition comprising a pore-containing, homogeneous solid mixture which comprises at least one catalytic metal and an inorganic support comprising alumina and silica. The pores of the homogenous solid mixture have an average diameter in a range of about 1 nanometer to about 200 nanometers. A method of upgrading 110 a hydrocarbon feedstock 120 to a liquid fuel in the presence of the catalyst composition is also provided.

## Description

### BACKGROUND

The systems and techniques described include embodiments that relate to catalysts. They also include embodiments that relate to the manufacturing of catalysts and systems that may include catalysts. The invention also includes embodiments that relate to a method of upgrading a hydrocarbon feedstock in the presence of the catalyst.

In view of the projected, long-term shortages in the availability of quality fossil fuels, there has been tremendous interest in the development of renewable sources of fuels. One of the most attractive sources for such fuel is biomass, which can be used to prepare a variety of different types of fuel, some of which are referred to as "biofuel", or "biodiesel". As demonstrated by the current direction of research, renewable resources like solar power and wind energy are used for the production of electricity, whereas the fuels derived from biomass are predominantly used as transportation fuels.

One method of converting biomass sources to fuels involves producing oils from oilseeds and other feedstocks. These methods typically involve conversion to a diesel-like fuel, which is conventionally made by trans-esterification of oil derived from oilseeds, vegetable oils and animal fats. Trans-esterification involves a reaction with alcohol, and produces a mixture of esters of fatty acids. These fatty acid esters are typically called "biodiesel". Biodiesel is better suited for fuel applications than pure oils and fats, due to more advantageous characteristics, such as cold flow properties, combustion properties and the like. However, the use of the fatty acid ester fuels can result in operating problems, especially at low temperatures. Hence, the use of biodiesel in colder regions may be somewhat limited.

There are two main routes for producing liquid fuels from biomass materials. The indirect route involves biomass gasification. In such a process, the raw material is gasified under partial combustion conditions, to produce a syngas based on carbon monoxide and hydrogen. Air-blown circulating fluidized bed (CFB) gasifiers are often well-suited for small-scale biomass gasification. The syngas can then be converted into a liquid fuel by way of Fischer-Tropsch (FT) synthesis.

While the indirect method is useful in many situations, it often requires very high temperatures, for example, about 800 degrees Centigrade to about 1700 degree Centigrade, depending on the type of gasifier. There may also be difficulties in reliably feeding the raw material into the pressurized gasifier. Moreover, for the CFB processes, nitrogen dilution can be problematic. Also, high tar concentrations in the product gas often necessitates subsequent gas clean-up steps, which can increase capital costs.

Pyrolysis is another method for producing the liquid fuels from biomass, and this technique can be thought of as a "direct method". The process itself is known in the art, and involves the thermal decomposition of biomass or other carbonaceous materials. The process is carried out in the absence of oxygen, or in the presence of significantly reduced levels of oxygen, as compared to conventional combustion processes. The temperatures involved are much lower than for gasification, for example, about 400 degrees Centigrade to about 600 degrees Centigrade. The primary products of pyrolysis are oils, light gases, and char. As further described below, the vapor products of pyrolysis can be condensed to a liquid product, i.e., a "bio-oil", by condensation, for example.

Bio-oils ("pyrolysis oils") are valuable fuel precursors, but they are also quite distinct from hydrocarbon-based petroleum fuels. The high oxygen content of the pyrolysis oils, for example, up to about 50 percent by weight, would take such materials outside the conventional definition for a hydrocarbon. These relatively high levels of oxygen limit the use of the compositions, in applications such as transportation fuels (gasoline and diesel fuel). In most instances, the oxygen content would have to be reduced considerably, to allow additional upgrading steps to form the conventional diesel-like-fuels.

Current methods of producing diesel-like-fuel from biomass sources, for example, bio-oils, include directly contacting the bio-oils with catalysts. This results in the breakdown of the triglycerides, which are primary constituents of the bio-oils. This also results in upgrading the oils, as the reaction with hydrogen during the contacting step also results in saturation of double bonds, thus producing linear alkane fuel mixtures, which have better operating ranges. In order to effectively produce fuels other than diesel, a catalyst is needed which is selective for producing linear alkane fuel mixtures, sometimes referred to as "middle distillate fuels".

In view of these considerations, new processes for preparing catalysts and new processes for using these catalysts for upgrading the bio-oils would be welcome in the art. The new processes should also be capable of economic implementation, and should be compatible with other procedures, e.g., bio-oil producing processes.

### BRIEF DESCRIPTION

One embodiment of the invention provides a method of forming a catalyst. The method comprises reacting a reactive solution comprising at least one alumina precursor, at least one silica precursor, a templating agent, a solvent, a catalytic metal precursor, and a modifier, to form a gel. The method can also include calcining the gel to form a catalyst composition comprising a pore-containing, homogeneous solid mixture which comprises at least one catalytic metal and an inorganic support comprising alumina and silica. The pores of the homogenous solid mixture have an average diameter in a range of about 1 nanometer to about 200 nanometers.

An additional embodiment of the invention relates to a method of upgrading a hydrocarbon feedstock to a liquid fuel in the presence of a catalyst composition. The method includes a step of forming the catalyst composition. The method comprises reacting a reactive solution comprising at least one alumina precursor, at least one silica precursor, a templating agent, a solvent, a catalytic metal precursor, and a modifier, to transform the reactive solution into a gel. The method can also include calcining the gel to form a catalyst composition comprising a pore-containing, homogeneous solid mixture which comprises at least one catalytic metal and an inorganic support comprising alumina and silica. The pores of the homogenous solid mixture have an average diameter in a range of about 1 nanometer to about 200 nanometers.

### BRIEF DESCRIPTION OF FIGURES

These and other features, aspects, and advantages of the present invention will become better understood when the following detailed description is read, with reference to the accompanying drawings, by way of example, wherein:

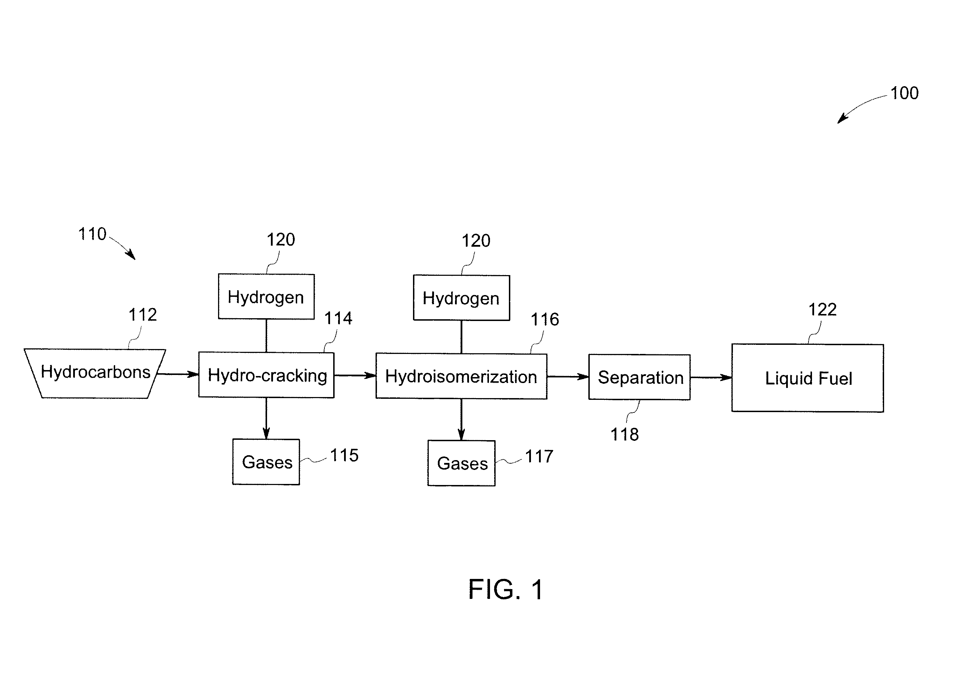

FIG. 1 is a process block flow diagram of the steps in an illustrative process for upgrading hydrocarbons to a fuel.

### DETAILED DESCRIPTION

The systems and techniques described include embodiments that relate to catalysts. They also include embodiments that relate to the manufacturing of catalysts and systems that may include catalysts. The invention also includes embodiments that relate to a method of upgrading a hydrocarbon feedstock in the presence of the catalyst. The catalyst composition may selectively convert alkanes to a mixture of cycloalkanes, paraffins, and iso-paraffins. This mixture can be used as various fuels, such as diesel fuel, kerosene, and jet fuel.

Approximating language, as used herein throughout the specification and claims, may be applied to modify any quantitative representation that could permissibly vary without resulting in a change in the basic function to which it is related. Accordingly, a value modified by a term such as "about" is not to be limited to the precise value specified. In some instances, the approximating language may correspond to the precision of an instrument for measuring the value. Similarly, "free" may be used in combination with a term, and may include an insubstantial number, or trace amounts, while still being considered free of the modified term.

As used herein, the terms "may" and "may be" indicate a possibility of an occurrence within a set of circumstances; a possession of a specified property, characteristic or function. These terms may also qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances, an event or capacity can be expected, while in other circumstances the event or capacity cannot occur - this distinction is captured by the terms "may" and "may be".

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive, and mean that there may be additional elements other than the listed elements. Furthermore, the terms "first," "second," and the like, herein do not denote any order, quantity, or importance, but rather are used to distinguish one element from another.

Embodiments of the invention described herein address the noted shortcomings of the state of the art. These embodiments advantageously provide an improved method of making a catalyst composition. The method of making the catalyst composition and the catalyst composition described herein fill the needs described above by employing a selected templating agent to provide the homogenous solid mixture containing (i) at least one catalytic metal and (ii) an inorganic support comprising alumina and silica. The homogeneous solid mixture usually includes pores having an average diameter in a range of about 1 nanometer to about 200 nanometers. The embodiments of the present invention also describe a method of employing the catalyst composition for upgrading a hydrocarbon feedstock to a liquid fuel. The hydrocarbon feedstock includes bio-oils that may be obtained from various sources as known in the art, including biomass and municipal solid wastes.

As used herein, without further qualifiers, a catalyst is a substance that can cause a change in the rate of a chemical reaction without itself being consumed in the reaction. A "slurry" is usually meant to describe a mixture of a liquid and finely divided particles. A gel is a colloid in which the dispersed phase has combined with the dispersion medium to produce a semisolid material, such as a jelly. A powder is a substance including finely dispersed solid particles. "Templating" refers to a controlled patterning. A templating agent refers to a compound or a chemical that enables the controlled patterning. "Templated" refers to the determined control of an imposed pattern, and may include molecular self-assembly. A "monolith" may be a ceramic block having a number of channels, and may be made by the extrusion of clay, binders and additives that are pushed through a dye to create a structure.

As used herein, the term "hydrocarbon feedstock" described in embodiments of the present invention includes bio-oil obtained from various sources. In one embodiment, the terms "oil" or "oils" or "bio-oil", mentioned herein, refer to natural oil, which may be already present in the feedstock, and typically produced by using mechanical and/or solvent extraction methods for the feedstock. In certain embodiments, the oils may include pyrolysis oil, which are produced by thermochemical processing, such as pyrolysis of waste feedstock, such as municipal solid wastes or pyrolysis of biomass.

As used herein, the term "biomass" may include a variety of renewable energy sources. Usually (though not always) this feedstock includes materials that are used to produce oil, and which are derived from renewable sources such as plants and trees. In general, biomass can include materials such as wood and tree based materials, forest residues, agricultural residues and energy crops. The wood and tree materials and forest residues may include wood, woodchips, saw dust, bark or other such products from trees, straw, grass, and the like. Agricultural residue and energy crops may further include short rotation herbaceous species, husks such as rice husk, coffee husk, etc., maize, corn stover, oilseeds, residues of oilseed extraction, and the like. The oilseed may include typical oil bearing seeds like soybean, colza, camelina, canola, rapeseed, corn, cottonseed, sunflower, safflower, flax, olive, peanut, shea nut and the like. The bio-oil feedstock may also include inedible varieties like linseed castor, jatropha and the like. Bio-oil feedstock also includes other parts of trees that are used for oil extraction. Examples include coconut, babassu and palm in general. In these instances, the oil is typically extracted from kernels instead of the seeds. The bio-oil feedstock may also include certain algae, microalgae and seaweeds that produce oil. Generically, the bio-oil feedstock includes oils derived from plants and parts of plants, which may also be referred to as plant-oil or vegetable oil.

The term "municipal solid waste" (MSW), can include household waste, along with commercial wastes, collected by a municipality within a given area. MSW can include inorganic and organic components in the form of cellulosic materials, metals (both ferrous and non-ferrous), plastic, glass, food, and others. MSW can be derived from packaging materials, e.g., mixed cellulosic paperboard packaging materials, corrugated paperboard, plastic wrap, plastic bottles, steel cans, aluminum cans, other plastic or metal packaging materials, glass bottles, and container waste. Such waste can be any combination of plastic, metal, and paper. Material typically available in municipal waste that can be used either as a feedstock for fuel production, or as a valuable recycled product, includes cellulosic fiber or pulp, paperboard, corrugated paperboard, newsprint, glossy magazine stock, and a variety of other cellulosic board or sheet materials, which can include polymers, fillers, dyes, pigments, inks, coatings, and a variety of other materials. Other types of solid waste can also be processed using the apparatus and techniques herein. Those include medical waste, manure, and carcasses.

Vegetable fats and oils are substances derived from plants that are composed of glycerol esters such as monoglycerides, diglycerides and triglycerides. As is known in the art, triglycerides are compounds wherein glycerol is esterified with three fatty acids. The chemical formula for triglycerides is as shown, 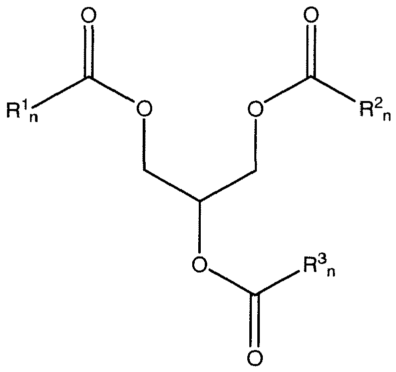 wherein R¹ₙ, R²ₙ, and R³ are long alkyl chains. The groups R¹ₙ, R²ₙ, and R³ₙ may all be different, two of them may be same, or all three may be same. The subscript "n" usually has a value from about 1 to about 36. Thus the esters include long, carbon-containing alkyl chains. Typically, oils are liquid at room temperature, and fats are solid. A dense fat is also called a "wax". It is understood that the term "vegetable oil", or "bio-oil" used herein, also includes vegetable fats and waxes in addition to the vegetable oils. Thus, with reference to FIG. 1, hydrocarbon feed-stock 112 usually (but not always) includes the bio-oils containing vegetable fats and waxes. (Bio-oils are used as an example here, but other hydrocarbons could be treated in this manner). Generically, bio-oil 112 includes fatty acid compounds. In some embodiments, the bio-oil may include C₁₆-C₄₀ fatty acids. In some embodiments, the fatty acids may not necessarily be incorporated into the chemical structure of glycerides as described above, but can instead exist in other forms, e.g., as free fatty acids.

Generally, vegetable oils are extracted from plants by placing the relevant part of the plant under pressure, to extract the oil. Solvent extraction is another common method, which is used alone or in conjunction with pressure extraction. Typically, hexane is used as a solvent for oil extraction from oil seeds. Various other solvents with a boiling point less than the oil being extracted could be employed. Compounds with carbon numbers between C₅-C₈ are typically employed. In some embodiments a mixture of solvents may also be employed. In some embodiments, the solvent may include constituents such as naphtha. In various embodiments, a combination of mechanical extraction and solvent extraction methods is employed to extract oil from the oil seeds.

In one embodiment, the present invention provides a method for manufacturing a catalyst composition. The method comprises reacting a reactive solution (sometimes referred to here as a "mixture") comprising at least one alumina precursor, at least one silica precursor, a templating agent, a catalytic metal precursor, a solvent, and a modifier, to form a gel. The method can further include calcining the gel to form a catalyst composition comprising a pore-containing, homogeneous solid mixture which comprises at least one catalytic metal and an inorganic support comprising alumina and silica. The pores of the homogenous solid mixture have an average diameter in a range of about 1 nanometer to about 200 nanometers.

The reactive solution includes an alumina precursor and a silica precursor. The reactive solution is usually in the form of a sol, and is converted to a gel by the sol-gel process. The gel is filtered, washed, dried and calcined to yield the metal inorganic support. The use of the templating agent in the reactive solution controls pore formation in the pore-containing homogenous solid mixture. In one embodiment, the method further comprises controlling the particle size of the catalytic metal by reducing the catalytic metal lability, or propensity to agglomerate. In one embodiment, the method further comprises controlling the particle size of the catalytic metal by controlling, with respect to pore formation of the porous template, one or more properties or characteristics such as pore size, pore distribution, pore spacing, or pore dispersity.

During the calcination process, the catalytic metal precursor may be reduced to the corresponding catalytic metal. In one embodiment, the reactive solution may include a catalytic metal precursor in addition to the metal inorganic support precursor, the solvent, the modifier, and the templating agent during the gel formation step. The gel formed includes the catalytic metal precursor. The gel is then calcined to form the homogenous solid mixture containing a metal inorganic support and a catalytic metal.

In one embodiment, the gel may be subjected to supercritical extraction in order to produce the porous metal inorganic support. Carbon dioxide can be used as the supercritical fluid to facilitate the supercritical extraction.

According to primary embodiments of the present invention, the method of making the catalyst composition requires the presence of at least one alumina precursor in the reactive solution. A number of alumina precursors are possible. Examples include aluminum isopropoxide, aluminum tributoxide, aluminum ethoxide, aluminum-tri-sec-butoxide, or aluminum tert-butoxide. In one embodiment, the alumina precursor comprises aluminum isopropoxide. In one embodiment, the alumina precursor present in the reactive solution is in an amount greater than about 0.1 weight percent, based on the total weight of the reactive solution. In another embodiment, the alumina precursor present in the reactive solution is in an amount greater than about 10 weight percent, based on the total weight of the reactive solution. In yet another embodiment, the alumina precursor present in the reactive solution is in an amount greater than about 25 weight percent, based on the total weight of the reactive solution. The amount of alumina precursor employed typically depends on obtaining an improved yield of alumina in the catalyst composition based on the volume of the kettle. In one embodiment, the alumina precursor present in the reactive solution is in an amount in the range from about 0.1 weight percent to about 50 weight percent, based on the total weight of the reactive solution. In another embodiment, the alumina precursor present in the reactive solution is in an amount in the range from about 5 weight percent to about 25 weight percent, based on the total weight of the reactive solution. In yet another embodiment, the alumina precursor present in the reactive solution is in an amount in the range from about 10 weight percent to about 20 weight percent, based on the total weight of the reactive solution.

According to primary embodiments of the present invention, the method of making the catalyst composition requires the presence of at least one silica precursor in the reactive solution. In one embodiment, the silica precursor comprises tetraethyl orthosilicate, or tetramethyl orthosilicate. In one embodiment, the silica precursor present in the reactive solution is in an amount greater than about 0.1 weight percent, based on the total weight of the reactive solution. In another embodiment, the silica precursor present in the reactive solution is in an amount greater than about 10 weight percent, based on the total weight of the reactive solution. In yet another embodiment, the silica precursor present in the reactive solution is in an amount greater than about 25 weight percent, based on the total weight of the reactive solution. In one embodiment, the silica precursor present in the reactive solution is in an amount in the range from about 0.1 weight percent to about 50 weight percent, based on the total weight of the reactive solution. In another embodiment, the silica precursor present in the reactive solution is in an amount in the range from about 5 weight percent to about 25 weight percent, based on the total weight of the reactive solution. In yet another embodiment, the silica precursor present in the reactive solution is in an amount in the range from about 10 weight percent to about 20 weight percent, based on the total weight of the reactive solution. The amount of silica precursor employed typically depends on obtaining an improved yield of silica in the catalyst composition based on the volume of the kettle.

In one embodiment, the alumina precursor present in the reactive solution is in an amount in a range from about 1 weight percent to about 99 weight percent, based on an amount of the silica precursor in the reactive solution. In another embodiment, the alumina precursor is present in an amount from about 5 weight percent to about 95 weight percent. In yet another embodiment, the alumina precursor is present in an amount from about 10 weight percent to about 90 weight percent. In yet another embodiment, the alumina precursor is present in an amount from about 20 weight percent to about 80 weight percent. In one embodiment, the ratio of the amount of alumina precursor present in the mixture to the amount of the silica precursor present in the mixture is in a range of about 5 : 95 to about 30 : 70. In one embodiment, the ratio of the amount of alumina precursor present in the mixture to the amount of the silica precursor present in the mixture is in a range of about 10 : 90 to about 20 : 80.

According to certain embodiments of the present invention, the method of making the catalyst composition requires the presence of at least one catalytic metal precursor. In one embodiment, the catalytic metal precursor may comprise a transition metal precursor. A number of transition metals are possible. The choice of a particular transition metal will depend on various factors. At least one of these factors includes the composition of the hydrocarbon feedstock that is to be upgraded. In one embodiment, the catalytic metal precursor comprises oxides, halides, sulfates, nitrates, salts, or sulfides of a transition metal. In one embodiment, the catalytic metal precursor comprises a salt of copper, silver, gold, iron, cobalt, nickel, platinum, palladium, nickel, rhodium, osmium, ruthenium, or iridium. In one embodiment, the transition metal is platinum.

One skilled in the art will appreciate that the amount of transition metal used in the catalyst will be dependent on the catalytic activity desired of the final catalyst. Accordingly, the transition metal may be present in the catalyst composition in an amount less than or equal to about 10 weight percent, based upon the total weight of the catalyst composition. In one embodiment, the transition metal is present in an amount in a range from about 0.1 weight percent to about 10 weight percent. In another embodiment, the transition metal is present in an amount in a range from about 0.2 weight percent to about 5 weight percent. In yet another embodiment, the transition metal is present in an amount in a range from about 1 weight percent to about 2 weight percent.

The templating agents serve as templates, and may facilitate the production of metal inorganic supports containing directionally aligned tubular meso-channel forms, or pores. Control of the pore characteristic may, in turn, provide control of the particle size of the catalytic metal, by reducing the catalytic metal "lability", or propensity to agglomerate. The particle size of the catalytic metal may be controlled with respect to pore formation of the porous template by controlling or affecting one or more of pore size, pore distribution, pore spacing, or pore dispersity.

The reactive solution may include the templating agent in an amount greater than about 0.1 weight percent, based on the weight of the reactive solution. In one embodiment, the templating agent amount is present in a range from about 0.01 weight percent to about 50 weight percent. In another embodiment, the templating agent amount is present in a range from about 1 weight percent to about 45 weight percent. In yet another embodiment, the templating agent amount is present in a range from about 2 weight percent to about 40 weight percent. In yet another embodiment, the amount of templating agent is about 1.5 weight percent to about 5 weight percent.

Selection of the type(s) and amounts of the templating agent may affect or control the pore characteristics of the resultant templated substrate. Suitable templating agents may include one or more surfactants, cyclodextrins, and crown ethers. Suitable surfactants may include cationic surfactants, anionic surfactants, non-ionic surfactants, or Zwitterionic surfactants. In one embodiment, the templating agent may include one or more cyclic species. Examples of such cyclic species may include cyclodextrin and crown ethers.

Suitable cationic surfactants may include cetyltrimethyl ammonium bromide (CTAB), cetylpyridinium chloride (CPC), polyethoxylated tallow amine (POEA), benzalkonium chloride (BAC), and benzethonium chloride (BZT). Other suitable cationic surfactants may include those having a chemical structure denoted by CH₃(CH₂)₁₅N(CH₃)₃-Br, CH₃(CH₂)₁₅-(PEO)ₙ-OH, where n can be about 2 to about 20, and where PEO is polyethylene oxide, CH₃(CH₂)₁₄COOH, and CH₃(CH₂)₁₅NH₂. Other suitable cationic surfactants may include one or more fluorocarbon surfactants, such as C₃F₇O(CFCF₃CF₂O)₂CFCF₃-CONH(CH₂)₃N(C₂H₅)2CH₃I), commercially available as FC-4.

Suitable anionic surfactants may include one or more of sodium dodecyl sulfate (SDS), ammonium lauryl sulfate, alkyl sulfate salts, sodium laureth sulfate (also known as sodium lauryl ether sulfate (SLES)), alkyl benzene sulfonate, soaps, fatty acid salts, or sodium dioctyl sulfonate (AOT). Suitable Zwitterionic surfactants may include dodecyl betaine, dodecyl dimethylamine oxide, cocamidopropyl betaine, or coco ampho-glycinate.

Nonionic surfactants may have polyethylene oxide molecules as hydrophilic groups. Suitable ionic surfactants may include alkyl poly(ethylene oxide), and copolymers of poly(ethylene oxide) and poly(propylene oxide), some of which are commercially referred to as "Poloxamers" or "Poloxamines", and commercially available under the trade name PLURONICS^{™}. Examples of copolymers of poly (ethylene oxide) are (EO)₁₉(PO)₃₉(EO)₁₉, (EO)₂₀(PO)₆₉(EO)₂₀, (EO)₁₃(PO)₃₀(EO)₁₃, poly(isobutylene)-block-poly (ethylene oxide), poly (styrene) -block- poly (ethylene oxide) diblock copolymers, and block copolymer hexyl -oligo (p-phenylene ethynylene) - poly (ethylene oxide), wherein "EO" is an ethylene oxide unit.

Suitable non-ionic surfactants may include one or more alkyl polyglucosides, octylphenol ethoxylate, decyl maltoside, fatty alcohols, cetyl alcohol, oleyl alcohol, cocamide monoethanolamine, cocamide diethanolamine, cocamide triethanolamine, 4-(1,1,3,3- tetramethyl butyl) phenyl-poly (ethylene glycol), polysorbitan monooleate, or amphiphilic poly (phenylene ethylene) (PPE). Suitable poly glucosides may include octyl glucoside. Other suitable non-ionic surfactants may include long-chain alkyl amines, such as primary alkylamines and N,N-dimethyl alkylamines. Suitable primary alkylamines may include dodecylamine and hexadecylamine. Suitable N,N-dimethyl alkylamines may include N,N-dimethyl dodecylamine or N,N-dimethyl hexadecylamine.

In one embodiment, the templating agent may include cyclodextrin. Cyclodextrins may include cyclic oligosaccharides that include 5 or more α-D-glucopyranoside units linked 1 to 4, as in amylose (a fragment of starch). Suitable cyclodextrins in the templating agent may include 5-member to about 150-membered cyclic oligosaccharides. Exemplary cyclodextrins include a number of glucose monomers ranging from six to eight units in a ring. Suitable cyclodextrins are α-cyclodextrin, a six member sugar ring molecule; β-cyclodextrin, a seven sugar ring molecule; γ-cyclodextrin, an eight sugar ring molecule; or the like.

As noted above, the templating agent can include crown ethers. Crown ethers are heterocyclic chemical compounds that include a ring containing several ether groups. Suitable crown ethers may include oligomers of ethylene oxide, the repeating unit being ethyleneoxy, i.e., -CH₂CH₂O-. Useful members of this series may include the tetramer (n = 4), the pentamer (n = 5), and the hexamer (n = 6). Crown ethers derived from catechol may be used in the templating agent. Crown ethers that strongly bind certain types of cations to form complexes may be included in the templating agents. The oxygen atoms in the crown ether may coordinate with a cation located at the interior of the ring, whereas the exterior of the ring may be hydrophobic. For example, 18-crown-6 has a high affinity for potassium cation, 15-crown-5 for sodium cation, and 12-crown-4 for lithium cation.

In one embodiment, the templating agent may include one or more surfactants selected from an octylphenol ethoxylate having a structure [I] 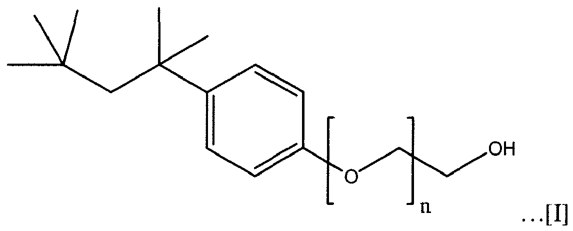 wherein "n" is an integer having a value of about 8 to 20. In one embodiment, "n" is an integer having a value 12, and the octylphenol ethoxylate has a structure [II].

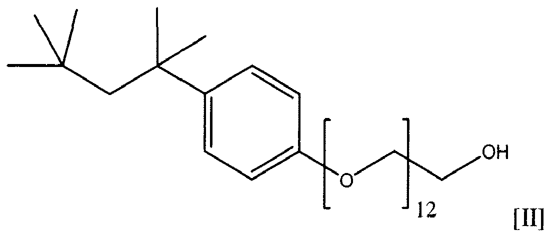

In another embodiment, "n" is an integer having a value 16 and the octylphenol ethoxylate has a structure [III].

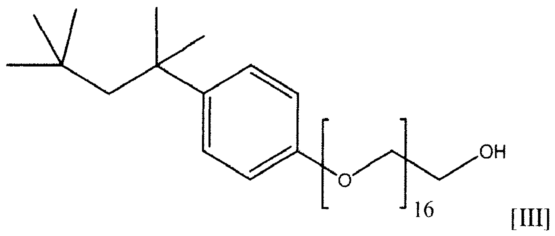

The octylphenol ethoxylate having a structure [II], where "n" is an integer having a value 12, is commercially available as TRITON^{™} X-102. The octylphenol ethoxylate having a structure [III], where "n" is an integer having a value 16, is commercially available as TRITON^{™} X-165. The octylphenol ethoxylate having a structure [I], where "n" is an integer having a value 7 to 8, is commercially available as TRITON^{™} X-114.

In one embodiment, the pores present in the homogenous solid mixture have an average diameter of greater than or equal to about 2 nanometers. In one embodiment, the homogenous solid mixture may have an average diameter of pores in a range from about 2 nanometers to about 200 nanometers. In another embodiment, the homogenous solid mixture may have an average diameter of pores in a range from about 3 nanometers to about 150 nanometers. In yet another embodiment, the homogenous solid mixture may have an average diameter of pores in a range from about 5 nanometers to about 100 nanometers. In one embodiment, the homogenous solid mixture may have an average diameter of pores in a range from about 1 nanometer to about 5 nanometers. The average diameter of pores may be measured using nitrogen adsorption measurements with the BET method. The BET theory is a rule for the physical adsorption of gas molecules on a solid surface, and serves as the basis for an important analysis technique for the measurement of the specific surface area of a material. BET is short hand for the names of the developers of the theory: Stephen Brunauer, Paul Hugh Emmett, and Edward Teller.

In certain embodiments, the pore size has a narrow monomodal distribution. In one embodiment, the pores have a pore size distribution polydispersity index that is less than about 1.5, such as, in some embodiments, less than about 1.3, and, in particular embodiments, less than about 1.1. In one embodiment, the distribution of diameter sizes may be bimodal, or multimodal.

In another embodiment, the pore-containing homogenous solid mixture may include one or more stabilizers. The stabilizes may be added to the reactive solution during the formation of the homogenous solid mixture. For example, in various embodiments, the homogenous solid mixture comprising predominantly alumina has smaller amounts of yttria, zirconia, or ceria added to it. In one embodiment, the amount of yttria, zirconia, or ceria is in a range of about 0.1 percent to about 10 percent, based on the weight of the alumina. In another embodiment, the amount of yttria, zirconia, or ceria is in a range of about 1 percent to about 9 percent, based on the weight of the alumina. In yet another embodiment, the amount of yttria, zirconia, or ceria is in a range of about 2 percent to about 6 percent, based on the weight of the alumina.

In one embodiment, the pores may be distributed in a controlled and repeating fashion to form a pattern. In other words, the pore arrangement is regular and not random. As defined herein, the phrase "pore arrangement is regular" means that the pores may be ordered, and may have an average periodicity. The average pore spacing may be controlled and selected, based on the surfactant selection that is used during the gelation. In one embodiment, the pores are unidirectional, are periodically spaced, and have an average periodicity. In one embodiment, the porous metal inorganic support has pores that have a spacing of greater than about 20 Angstroms. In another embodiment, the spacing is in a range from about 30 Angstroms to about 300 Angstroms. In yet another embodiment, the spacing is in a range from about 50 Angstroms to about 200 Angstroms. In still another embodiment, the spacing is in a range from about 60 Angstroms to about 150 Angstroms. The average pore spacing (periodicity) may be measured using small angle X-ray scattering. In yet another embodiment, the pore spacing is random.

The pore-containing homogenous solid mixture may be made up of particles. The particles may be agglomerates, a sintered mass, a surface coating on a support, or the like. The pore-containing homogenous solid mixture may have an average particle size of up to about 4 millimeters. In one embodiment, the average particle size is in a range from about 5 micrometers to about 3 millimeters. In another embodiment, the average particle size is in a range from about 500 micrometers to about 2.5 millimeters. In yet another embodiment, the homogenous solid mixture may have an average particle size in a range from about 1 millimeter to about 2 millimeters. In another embodiment, the average particle size is about 35 micrometers to 40 micrometers.

The pore-containing homogenous solid mixture may have a surface area greater than about 50 square meters per gram. In one embodiment, the surface area is in a range from about 50 square meters per gram to about 2000 square meters per gram. In another embodiment, the surface area is in a range from about 100 square meters per gram to about 1000 square meters per gram. In still another embodiment, the surface area is in a range from about 300 square meters per gram to about 600 square meters per gram.

In various embodiments, the solvents (i.e., a single solvent or a solvent mixture) used in manufacturing the catalytic composition include one or more solvents selected from aprotic polar solvents, polar protic solvents, and non-polar solvents. Suitable aprotic polar solvents may include propylene carbonate, ethylene carbonate, butyrolactone, acetonitrile, benzonitrile, nitromethane, nitrobenzene, sulfolane, dimethylformamide, N-methylpyrrolidone, or the like. Suitable polar protic solvents may include water, nitromethane, acetonitrile, and short chain alcohols. Suitable short chain alcohols may include one or more of methanol, ethanol, propanol, isopropanol, butanol, or the like. Suitable non polar solvents may include benzene, toluene, methylene chloride, carbon tetrachloride, hexane, diethyl ether, or tetrahydrofuran. In one embodiment, a combination of solvents may also be used. Ionic liquids may be used as solvents during gelation. In one embodiment, the solvent used is 2-propanol, or a solvent mixture comprising 2-propanol.

In various embodiments, the solvent may be present in an amount greater than about 0.5 parts, based on the weight of the reactive solution. In one embodiment, the amount of solvent present may be in a range from about 0.5 parts to about 800 parts. In another embodiment, the amount of solvent present may be in a range from about 20 parts to about 700 parts. In yet another embodiment, the amount of solvent present may be in a range from about 50 parts to about 600 parts. Selection of the type and amount of solvent may affect or control the amount of porosity generated in the catalyst composition, as well as affecting or controlling other pore characteristics.

Modifiers may be used to control hydrolysis kinetics of the inorganic alkoxides. Suitable modifiers may include one or more of compounds such as ethyl acetoacetate (EA), ethylene glycol (EG), triethanolamine (TA), and the like. In one embodiment, the reactive solution contains a modifier in an amount greater than about 0.1 weight percent, based on the weight of the reactive solution. In one embodiment, the amount of modifier present may be in a range from about 0.1 weight percent to about 5 weight percent, based on the weight of the reactive solution. In another embodiment, the amount of modifier present may be in a range from about 1 weight percent to about 4 weight percent, based on the weight of the reactive solution. In yet another embodiment, the amount of modifier present may be in a range from about 2 weight percent to about 3 weight percent, based on the weight of the reactive solution.

In one embodiment, the catalyst composition may further comprise at least one promoting metal. A promoting metal is a metal that enhances the action of a catalyst. In one embodiment, the promoting metal may be selected from the group consisting of gallium, indium, gold, vanadium, zinc, tin, bismuth, cobalt, molybdenum, and tungsten. In one embodiment, the promoting metal may be present in an amount in a range from about 0.1 weight percent to about 20 weight percent. In another embodiment, the promoting metal may be present in an amount in a range from about 0.5 weight percent to about 15 weight percent. In yet another embodiment, the promoting metal may be present in an amount in a range from about 1 weight percent to about 12 weight percent.

In one embodiment, the reaction step is carried out for a time period and at a temperature that is sufficient to cause complete hydrolysis and condensation of all precursors to form a gel. In one embodiment, the reaction step is carried out for a time period of about 8 hours to about 24 hours under reflux. In another embodiment, the reaction step is carried out for a time period of about 10 hours to about 23 hours under reflux. In yet another embodiment, the reaction step is carried out for a time period of about 15 hours to about 22 hours under reflux..

In one embodiment, the step of calcining the gel may be carried out for a time period and at a temperature that is sufficient to convert the gel to the catalyst composition. In one embodiment, the calcining step is conducted at temperatures in a range from about 350° C to about 650° C. In another embodiment, the calcining step is conducted at temperatures in a range from about 400° C to about 600° C. In yet another embodiment, the calcining step is conducted at temperatures in a range from about 450° C to about 550° C. In various embodiments, the calcining step may be conducted for a time period in a range from about 10 minutes to about 30 minutes, from about 30 minutes to about 60 minutes, from about 60 minutes to about 10 hours, from about 10 hours to about 24 hours, or from about 24 hours to about 48 hours. In one embodiment, the calcination may be carried out by heating the gel to a final temperature of about 450° C to about 650° C at a rate of about 1 to 5° C per minute. The gel is then maintained at this temperature for about 1 to 10 hours to form the catalyst composition.

In one embodiment, the catalyst composition may be manufactured by mixing a first solution, a second solution, and a third solution. In one embodiment, the first solution may be prepared by mixing the at least one silica precursor, the templating agent, the solvent, and the modifier. The second solution may be prepared by mixing the catalytic metal precursor, water, and the solvent. The third solution may be prepared by mixing the alumina precursor and the solvent. The second solution can be combined with the first solution at a temperature of about 20° C to about 30° C under stirring. The mixture of the first solution and the second solution can be stirred for a period of about 2 hours to 3 hours. The third solution can then be combined with the mixture of the first solution and the second solution at a temperature of about 20° C to about 30° C under stirring. The reactive solution so formed can be heated to reflux and maintained thereunder, for about 22 to 24 hours, to form the gel. The gel can then be calcined to provide the catalyst composition, as mentioned above.

The catalyst composition may be manufactured in powdered form, and may be manufactured in the form of a monolith, for example. In one embodiment, the catalyst composition may be disposed on a prefabricated monolithic core. The prefabricated monolithic core with the catalyst composition disposed thereon may be subjected to freeze drying, as well as to calcining, to produce a monolithic catalyst composition. In one embodiment, the prefabricated monolithic core with the catalyst composition disposed thereon may be subjected to supercritical fluid extraction, and to calcining, to produce a monolithic catalyst composition.

In one embodiment, the average pore size of the metal inorganic support is controlled and selected to reduce or eliminate poisoning. Poisoning may affect catalytic ability, and can occur by the presence of aromatic compounds in the reductant, or in the exhaust gas stream. The porous material described herein is more resistant to poisoning from an aromatic-containing reductant, than a conventional baseline material, e.g., a gamma phase alumina material, impregnated with silver.

An average catalyst composition particle size is less than about 100 nanometers. In one embodiment, the average catalyst composition particle size is in a range from about 0.1 nanometer to about 90 nanometers. In another embodiment, the average catalyst composition particle size is in a range from about 1 nanometer to about 80 nanometers. In yet another embodiment, the average catalyst composition particle size is in a range from about 5 nanometers to about 50 nanometers.

In another embodiment, a method of upgrading a hydrocarbon feedstock to a liquid fuel in the presence of a catalyst composition is provided. In a first step, the method includes forming the catalyst composition. The method can comprise reacting a reactive solution comprising at least one alumina precursor, at least one silica precursor, a templating agent, a solvent, a catalytic metal precursor, and a modifier, to transform the reactive solution into a gel. The method includes calcining the gel to form a catalyst composition comprising a pore-containing, homogeneous solid mixture which comprises at least one catalytic metal and an inorganic support comprising alumina and silica. The pores of the homogenous solid mixture have an average diameter in a range of about 1 nanometer to about 200 nanometers.

In a second step, the catalyst composition is employed to upgrade the hydrocarbon feedstock to liquid fuel. In one embodiment, the process of upgrading includes the steps of hydro-treating and then, optionally, hydro-isomerization of the hydrocarbon feedstock. Separation steps may also be included. In one embodiment, the process of upgrading includes the steps of hydro-treating and hydro-isomerization of the hydrocarbon feedstock. As used herein the term "hydro-treating" usually refers to the treatment of hydrocarbons with hydrogen, usually in the presence of a catalyst. Examples (though non-limiting) of reactions that may occur are hydrodesulphurization, hydrodeoxygenation, saturation, hydrocracking, and hydroisomerization. The upgrading process can further include a separation step 118, after the hydro-isomerization step.

Hydro-treating is known in the art and described, for example, in U.S. Patent Serial No. 11/962245 filed on December 21, 2007; U.S. Patent Serial No. 12/101197, filed on April 11, 2008; and in U.S. Patent Serial No.12/845,333 filed on July 28, 2010, all of which are incorporated herein by reference. In the case of bio-oil processing as described in embodiments of the present invention, hydro-treating is primarily employed to effect hydro-deoxygenation. Oxygen does not add to the heating value of the fuel product and hence, it is desirable to keep the concentration of oxygen at relatively low levels. In some embodiments, the oxygen concentration is reduced to levels as low as about 0.004 percent by weight. The hydro-treating reaction also involves saturation of the double bonds. It removes the double bonds from the components of bio-oil, and this reduces the problems associated with unsaturated compounds that would readily polymerize and cause fuel instability and problems in combustion.

As used herein, "hydro-isomerization" typically involves the reaction of linear alkanes with hydrogen over catalysts, to produce branched compounds. Branched isomers of paraffins have higher octane numbers than the corresponding normal straight alkanes and hence, are a desirable component of the fuel. Other properties such as flash point, freezing point and the like are maintained in specified ranges for each variety. Isomerization is also useful for improving the cloud point of the fuel, resulting in improved usability of the fuel at low temperatures.

The upgrading process, according to one embodiment of the present invention, is shown in FIG. 1. FIG. 1 is a process block flow diagram (BFD) 100 of the basic steps in the upgrading process 110 for preparing liquid fuels, using the hydrocarbon feedstock 112, described previously. The hydrocarbon feedstock 112 is subjected to a process of oil upgrading 110, to produce a liquid fuel 122, comprising kerosene, naphtha, jet-fuel, and diesel fuel. The upgrading process 110 involves operations like hydro-cracking 114 and hydro-isomerization 116. The upgrading process 110 may further include a separation step 118. The separation step is often used to separate the various product components. As an example, the separation step can separate various components of the isomerization products. This could involve, for example, a separation of different fractions (components or a set of components) based on their boiling point range. The separation step can include any of the known separation techniques, such as flash distillation, fractionation, and the like.

A catalyst composition prepared in accordance with various embodiments discussed herein is employed in the hydro-cracking 114 and hydro-isomerization 116 operations of the upgrading process 110. {The catalyst composition for each step would preferably be within the scope of the inventive embodiments described herein, though the compositions need not be identical). The type of reactors employed for hydro-cracking 114 and hydro-isomerization may vary, depending on the type of hydrocarbon feedstock and catalyst composition. Non-limiting examples of such reactors include tubular reactors, cyclone reactors, rotating cone reactors, ablative reactors, or fluidized bed reactors. Fluidized bed reactors are preferred in some embodiments. In certain embodiments, hydrogen 120 which is required during the upgrading process 110 may be supplied from a hydrogen source (not shown in figure), as known to one skilled in the art. The hydrogen 120 employed for the upgrading step may be generated by any known methods known to one skilled in the art. In one embodiment, the hydrogen 120 is generated using methods disclosed in U.S. Patent Application 2009/0259082.

As mentioned above, bio-oil 112 includes compounds such as triglycerides, fatty acids and other esters of fatty acids. In a typically embodiment, the hydrogen 120 reacts with the triglycerides to form hydrogenated triglycerides. The hydrogenated triglycerides further react with hydrogen 120 to form diglycerides, monoglycerides, acids, and waxes. These materials further react with additional amounts of hydrogen 120, to undergo hydro-deoxygenation, usually forming various gases 115, e.g., residual hydrogen, and light hydrocarbons, such as methane, propane, and in some instances, linear C₁₆ and C₁₈ alkanes. A side reaction--decarboxylation--can also occur, wherein CO₂ is removed as a byproduct, and normal alkanes with a lower carbon number are formed.

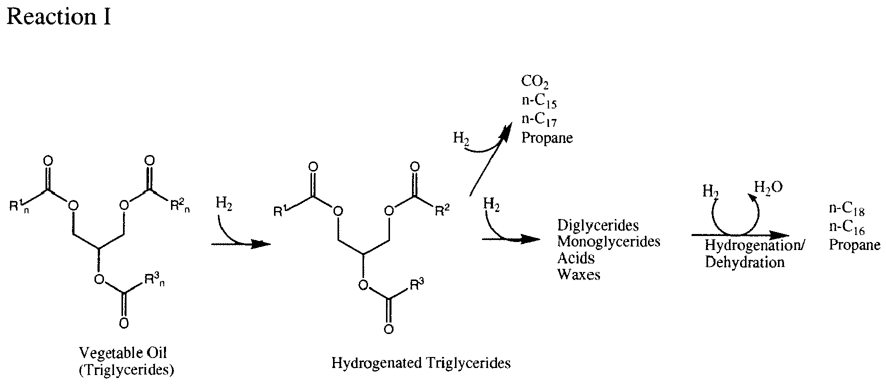

Here, Cₙ refers to an alkyl group with a chain length of n units. Thus, C₁₈ refers to an alkane with 18 carbon atoms in it. The prefix "n" is used to indicate that the hydrocarbon Cₙ₊₁ is formed with a "normal" or linear structure. The alkyl groups Cₙ may be either saturated or unsaturated. The unsaturated hydrocarbons which are formed can further react with hydrogen to form saturated hydrocarbons. The type of alkanes that are formed depend on the fatty acids and the glycerides present in the bio-oil 112. The above illustration shows the typical reactions involved in the hydrotreatment of soybean oil. These reactions result in the formation of compounds like n-C₁₈, n-C₁₆, and propane. Due to side reactions such as decarboxylation, compounds like n-C₁₅, n-C₁₇, and gases 117, for example CO₂ may also be formed.

As shown in FIG. 1, the first step of hydro-cracking 114 results in breaking of the double bonds through the dehydrogenation of the triglyceride. The first hydrocracking step 114 reuslts in the formation of linear alkanes or n-alkanes that are typically C₁₇ and C₁₈, depending on the triglyceride employed. The n-alkanes are then converted to i-alkanes in the hydroisomerization step 116, to obtain a product having high value fuel. Simultaneiously, in the hydroisomerization step 116, a hydrocracking step may also be included. The hydrocracking step results in converting the C₁₇ and C₁₈ alkanes to jet fuel, which is typically C₉ to C₁₄.

Typical temperatures maintained during upgrading, i.e., during both the hydro-cracking step and during the hydro-isomerization step, are between about 200° C and about 450° C. A typical pressure range for the hydro-treating operation is between about 10 bar and about 80 bar. In some embodiments, a pressure range of about 40 bar to about 60 bar, and a temperature range of about 275° C to about 350° C, may be employed. Typically the reaction includes rearrangement of the alkyl groups after the hydro-cracking step. In general terms, the hydro-isomerization may be represented as:

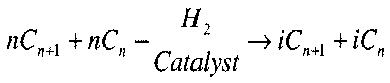

The prefix "i" represents the isomers with a branched molecular structure. Thus, compounds represented by formulae iCₙ₊₁ and iCₙ represent isomers with different carbon chain lengths. Thus, hydro-isomerization changes the carbon number distribution in the reactant compounds to the distribution in the product compounds. In some instances, hydro-isomerization may also include hydro-cracking reactions. The hydro-isomerization usually results in the production of branched alkanes (paraffins and iso-paraffins) of various chain lengths, and cyclic compounds such as cycloalkanes. The composition of product compounds may vary, depending upon the type of fatty acids involved in the glycerides or bio-oil feedstock, as well as process conditions. For a soybean seed feedstock, hydro-isomerization can produce a mixture of about 5 weight percent LPG (butane), about 5 weight percent naphtha and gasoline, about 50 weight jet fuel, and about 40 weight diesel fuel. However, the product composition varies widely, based on the operating conditions and specific catalysts used.

In one embodiment, the upgrading step comprises contacting a hydrocarbon feedstock with the catalyst composition at a weighted hourly speed velocity, and at a preselected temperature, so as to ensure a conversion of at least about 20 weight percent, based on an initial amount of hydrocarbons present in the feed stream. In one embodiment, upgrading comprises contacting a hydrocarbon feedstock with the catalyst composition, wherein the feed stream has a weighted hourly space velocity in a range from about 0.1 kilogram of hydrocarbons per hour per kilogram of catalyst, to about 2 kilograms of hydrocarbons per hour per kilogram of catalyst. In another embodiment, upgrading comprises contacting a hydrocarbon feedstock with the catalyst composition, wherein the feed stream has a weighted hourly space velocity in a range from about 0.3 kilogram of hydrocarbons per hour per kilogram of catalyst to about 1.5 kilograms of hydrocarbons per hour per kilogram of catalyst. In yet another embodiment, hydro-treating comprises contacting a feed stream of the hydrocarbons with the catalyst composition, wherein the feed stream has a weighted hourly space velocity in a range from about 0.5 kilogram of hydrocarbons per hour per kilogram of catalyst to about 1.1 kilograms of hydrocarbons per hour per kilogram of catalyst. The catalyst composition disclosed herein is effective at converting hydrocarbons to middle distillate liquid fuels 122. In a preferred embodiment, C₈ to C₄₀ alkanes, and more preferably C₁₂ to C₂₂ alkanes, are converted to middle distillate fuels by the catalyst composition. In one embodiment, the catalyst composition converts alkanes, such as heavy n-paraffins, to a mixture of cycloalkanes, paraffins and iso-paraffins.

### EXAMPLES

The following examples illustrate methods and embodiments in accordance with exemplary embodiments, and as such should not be construed as imposing limitations upon the claims. All components are commercially available from common chemical suppliers. The component and the source are listed in TABLE 1, below.

**TABLE 1**

| Component | Source |
|---|---|
| Ethylacetoacetate (EtOAc) | Aldrich |
| TRITON^{™} X-114 | Aldrich |
| Tetraethoxysilane (TEOS) | Aldrich |
| Aluminum sec-butoxide Al(OBu)₃ | Gelest |
| Dihydrogenhexachloroplatinate (H₂PtCl₆•6H₂O) | Aldrich |
| Iso propyl alcohol (IPA) | EM Scientific |

### EXAMPLE 1- (E1): PREPARATION OF CATALYST COMPOSITION

The catalyst composition was manufactured by making a first solution, a second solution and a third solution, which were mixed together. The amount of chemicals used for making the first solution, second solution and third solution are listed in Table 2 below. The first solution was prepared by mixing ethyl acetoacetate, TRITON^{™} X, tetraethoxysilane, and isopropyl alcohol. The mixing was carried out in a 5 liter, 3-neck flask equipped with a feed tube from a peristaltic pump, a condenser, and a mechanical stirrer. The second solution was prepared by mixing dihydrogenhexachloroplatinate, water, and isopropyl alcohol. The second solution was prepared by first dissolving dihydrogenhexachloroplatinate in water. The resultant solution was diluted with isopropyl alcohol. The third solution was added to the first solution via the feed tube, under stirring at a rate of about 4 milliliters per minute, at a temperature of about 25° C. The third solution was prepared by mixing aluminum sec-butoxide (Al(O^{sec}Bu)₃) and isopropyl alcohol. The mixture of the first solution and the second solution was stirred for about 135 minutes. The third solution was then added to the mixture of the first solution and the second solution in about 135 minutes, at an ambient temperature of about 25° C with stirring, and held at 25° C. The reactive solution in the flask was then heated to reflux and maintained under reflux for about 22.5 hours. The resultant solution was maroon in color.

The flask was then cooled to a temperature of about 25° C, and the contents were then filtered. The resultant solid was Soxhlet- extracted, using ethanol for a period of about 1 day under reflux. The resultant brown solid was then dried under vacuum at a temperature of 100° C and 30 millimeters of mercury, for a period of about 24 hours, to yield the reaction product in the form of a white powder. The dry reaction product was heated under a flow of nitrogen in a tube furnace, from a temperature of about 25° C to about 550° C, at a heating rate of 2° C/minute. The temperature was then maintained at 550° C for 1 hour. The reaction product was then calcined in the presence of air, at 550° C, for 5 hours, to produce a homogenous solid mixture. The ratio of silica to alumina in the composition of the powder after calcination was determined, and is provided in TABLE 3 below. The acid strength of the catalysts was determined and is also provided in TABLE 3.

### EXAMPLE 2- (E2): PREPARATION OF CATALYST COMPOSITION

As described in Example 1 above, a 3-necked, 5L liter flask equipped with a mechanical stirrer, reflux condenser and inlet from a peristaltic pump was charged with ethyl acetoacetate, Triton X114, TEOS and 2-propanol to form the first solution. Dihydrogenhexachloroplatinate was first dissolved in water, and then IPA was added to the resultant solution to form the second solution. The second solution was added to the first solution at a rate of about 3.7 milliliters per minute with stirring. After about 110 minutes, a third solution formed by mixing aluminum tertiary butoxide in IPA was added to the mixture of the first solution at a rate of about 3.7 milliliters per minute. After the addition was complete, heating was begun to achieve a reflux temperature, and the flask was maintained this temperature for about 22 hours. The initially orange suspension was black after heating. The slurry was filtered, and the filtered solid was extracted with ethanol in a Soxhlet extractor, and then the extracted solid was dried in a vacuum oven at 30 millimeters mercury at 100° C for about 24 hours. The solid was then pyrolyzed under nitrogen at 550° C, and then calcined in air at 550° C, to obtain the homogenous solid mixture, as explained in detail in Example 1.

The ratio of silica to alumina in the composition of the powder after calcination was determined, and is provided in TABLE 3 below. The acid strength of the catalysts was determined, and is also provided in TABLE 3.

### Comparative Example 1 (CE-1): PREPARATION OF POROUS ALUMINA WITH PLATINUM

A 3-necked, 5 liter flask equipped with a mechanical stirrer, reflux condenser and inlet from a peristaltic pump was charged with ethyl acetoacetate (13.26 grams), Triton X114 (68.36 grams) and 2-propanol (IPA, 300 milliliters). Al(OBu)₃ (250.48 grams) was added with 1 liter IPA to form a first solution. Dihydrogenhexachloroplatinate (1.62 grams) was dissolved in 37 milliliters of water and then 425 milliliters IPA to form a second solution. The second solution was added to the flask at a rate of 4.25 milliliters per minute with stirring. After about 150 minutes the mixture was heated to reflux and maintained at reflux for about 22 hours to about 23 hours. The resultant slurry was filtered. The filtered solid was extracted with ethanol in a Soxhlet extractor. The extracted solid was then dried in a vacuum oven at 30 millimeters of mercury at 100° C for about 24 hours. Then, the solids were pyrolyzed under nitrogen at 550° C and then calcined in air at 550° C, to provide the catalyst composition. The acid strength of the catalysts was determined and is provided in TABLE 3.

**TABLE 2**

| Examples/ Chemicals | EtAcOAc grams | Al(O^{sec}Bu)₃ grams | TRITON ™ X-grams | H2PtC16· 6H2O grams | Water milliliters | TEOS grams | IPA milliliters | Rate of addition of third solution milliliter s per minute |
|---|---|---|---|---|---|---|---|---|
| Example 1 | 5.5 | 3.21 | 47.23 (X114) | 1.25 | 31 | 80.05 | 1000+4.25+ 250 | 3.6 |
| Example 2 | 6.48 | 42.2 | 45.8 (X114) | 1.26 | 25 | 71.43 | 1000+425+ 250 | 3.7 |
| CE-1 | 13.26 | 250.48 | 68.36 (X114) | 1.62 | 37 | 0 | 300+1000+ 425 | 4.25 |

**TABLE 3**

| Ratio of silica to alumina in the catalyst composition | Acidity Values |
|---|---|
| 90:10 | 0.9468 |
| 80:20 | 0.6953 |
| 100:0 | 0.6038 |

The quantity and strength of the acid sites on oxide surfaces of the catalyst composition was determined using temperature-programmed desorption (TPD). For the set of experiments listed below, ammonia was used as the probe molecule to determine the acidity of the catalysts synthesized. The catalyst composition used for testing was sized between 25 to 40 mesh sieves. Approximately 0.15 gram of catalyst was packed between two quartz wool plugs. The catalyst was heated according to the protocol shown in TABLE 4. Treatment 1 is the initial ramp-up of the catalyst to clean the surface. Upon cooling to 120° C, the catalyst was saturated with 3 volume percent ammonia solution in water for about 30 minutes. The TCD detector is used to measure desorption characteristics of the catalyst during heating to 550° Centigrade. This is typically plotted as moles of ammonia desorbed, versus time. The acidity values calculated for E-1 and E-2 are given in TABLE 3, set forth above.

**TABLE 4**

| PROTOCOL | Start Temp | End Temp | Dwell time in minutes | Ramp rate in degrees Centigrade per minute | Atmosphere |
|---|---|---|---|---|---|
| Treatment 1 | 50 | 550 | 60 | 2 | Helium |
| Treatment 2 | 120 | 120 | 30 | | 3 weight percent ammonia/Helium |
| TCD | 120 | 550 | 30 | 10 | Helium |
| Treatment 3 | 550 | 40 | 30 | 10 | Helium |

Small angle X-ray scattering was used to characterize the catalyst composition manufactured in a manner similar to that described above. The resultant data indicates that the pore-containing homogenous solid mixture has average inter-domain and inter-pore spacings of 75 Angstroms and 95 Angstroms, respectively.

### EXAMPLES 3-11 and COMPARATIVE EXAMPLE 2-4 : PREPARATION OF CATALYST BED AND TEST CONDITIONS.

Catalysts were tested in a fixed bed, continuous flow reactor. The temperature, pressure, time, masses, and yield are provided in TABLE 5. The reactivity of the catalysts was tested using liquid feedstock (liquid input) of hydrotreated soybean and/or camelina oil (HT soy/cam oil), or recycled hydrotreated renewable (HR) diesel. The feedstock was pumped into the reactor at a pre-determined flow rate as given in TABLE 5. Hydrogen gas (gas input) was also fed into the reactor at a pre-determined flow rate. The liquid-hourly-space-velocity (lhsv) was calculated from the liquid feedstock feed rate and the volume of the catalyst in the reactor. The standard cubic feet per barrel (scf/bbl) of hydrogen fed in was calculated from the relative feed rates of the liquid feedstock and the hydrogen gas. A liquid gas separator was placed after the reactor. The liquid gas separator was maintained under a pre-determined pressure of about 55.2 bar. Gas product composition was obtained by refinery gas analysis (RGA) gas chromatography of the gas product stream (gas output). The liquid product composition (liquid output) was determined by detailed hydrocarbon analysis (DHA) gas chromatography of the liquid product stream. Mass balances was obtained with about ± 5 percent accuracy based on the composition of the four relevant streams: gas input, liquid input, gas output, and liquid output.

The yield of kerosene, naphtha, and LPG (KNL yield) was obtained from the DHA of the liquid product stream. Techniques for assigning n-alkane peaks in DHA chromatograms are known in the art. The KNL yield is taken to be all of the compounds with a retention time less than or equal to n-tetradecane. The only way these materials can be produced is by cracking of the liquid feedstock.

Percentage conversion was estimated as the ratio of the masses of n-pentadecane, n-hexadecane, n-heptadecane, n-octadecane, n-nonadecane, n-icosane, n-henicosane, n-docosane, n-tricosane, and n-tetracosane in the product liquid stream. These are the components that make up the feedstock stream. Percentage conversion gives the amount of feedstock that has undergone cracking and/or isomerization reactions.

### PREPARATION OF THE CATALYST BED:

The catalyst bed was prepared in a reactor having an internal diameter of about 0.5 inch, using the following procedure. On top of a 4 inch long support was placed a 30 mesh steel screen, a 150 mesh steel screen, about 1 milliliter of glass wool, and a 30 mesh steel screen. The steel screens were in the shape of circles having a diameter of about 0.5 inch. On top of this "first sandwich" was poured 5 milliliters of sand having a mesh size of 80 to 120 (#3 sand). A "second sandwich" as discussed above, was formed on top of the sand. About 5 milliliters to about 10 milliliters of catalyst composition was then poured on top of the second sandwich. The interstitial gaps between the catalyst particles were filled with alumina particles. Another approximately 1 milliliter of glass wool was put on top of the catalyst bed. The reactor was then filled with about 10 milliliter to about 15 milliliter of #3 sand. A thermocouple was positioned from the top of the reactor, such that it was measuring the temperature in the middle of the catalyst bed.

### TEST CONDITIONS: The test conditions are included in TABLE 5.

All experiments were run under a pressure of about 55.2 bar. The experiments were run for about 24 hours.

**TABLE 5**

| Example | Catalyst Composition | Feedstock | Temperature (degrees Centigrade) | lhsv | Hydrogen feed (scf/bbl) | KNL yield (mass Percentage) | Percentage conversion |
|---|---|---|---|---|---|---|---|
| E-3 | E-1 | HT-soy | 320 | 1.1 | 4000 | 12.7 | 28.6 |
| E-4 | E-1 | HT-soy | 330 | 1.1 | 4000 | 13.4 | 28.7 |
| E-5 | E-1 | HT-soy | 330 | 1.1 | 3900 | 15.4 | 30.5 |
| E-6 | E-1 | HT-soy | 350 | 1.1 | 3900 | 19.5 | 33.1 |
| E-7 | E-2 | Recycled diesel | 305 | 0.9 | 3400 | 11.8 | N/m |
| E-8 | E-2 | Recycled diesel | 315 | 1.0 | 3300 | 18.5 | N/m |
| E-9 | E-2 | HT-soy/cam oil | 300 | 1.0 | 3300 | 5.9 | 22.4 |
| E-10 | E-2 | HT-soy/cam oil | 320 | 1.0 | 3300 | 23.0 | 44.4 |
| E-11 | E-2 | HT-soy/cam oil | 350 | 1.0 | 3300 | 82.0 | 86.1 |
| CE-2 | CE-1 | HT-soy/cam oil | 320 | 1.0 | 2100 | No reaction observed | |
| CE-3 | CE-1 | HT-soy/camelma | 350 | 1.0 | 2100 | No reaction observed | |
| CE-4 | CE-1 | HT-soy/camelina | 370 | 1.0 | 2100 | No reaction observed | |

| | | | | | | | |
|---|---|---|---|---|---|---|---|
| n/m means "not measured" | | | | | | | |

The results shown in TABLE 5 indicate that the presence of both silica and alumina in the catalyst composition results in the conversion of the feedstock to KNL, as shown in E-3 to E-6 and E-9 to E-11. In contrast, for examples CE-2 to CE-4, where the catalyst prepared in CE-1 was used, no reaction was observed. It appears that the presence of silica and alumina in the catalytic composition is required for the conversion of the feedstock to KNL.

With regard to the term "reaction product", reference is made to substances, components, or ingredients in existence at the time just before first contacted, formed in situ, blended, or mixed with one or more other substances, components, or ingredients in accordance with the present disclosure. A substance, component or ingredient identified as a reaction product may gain an identity, property, or character through a chemical reaction or transformation during the course of contacting, in situ formation, blending, or mixing operations, if conducted in accordance with this disclosure with the application of common sense and the ordinary skill of one in the relevant art (e.g., a chemist). The transformation of chemical reactants or starting materials to chemical products or final materials is a continually evolving process, independent of the speed at which it occurs. Accordingly, as such a transformative process is in progress, there may be a mix of starting and final materials, as well as intermediate species that may be, depending on their kinetic lifetime, relatively easy or relatively difficult to detect with current analytical techniques known to those of ordinary skill in the art.

Reactants and components referred to by chemical name or formula in the specification or claims hereof, whether referred to in the singular or plural, may be identified as they exist prior to coming into contact with another substance referred to by chemical name or chemical type (e.g., another reactant or a solvent). Preliminary and/or transitional chemical changes, transformations, or reactions, if any, that take place in the resulting mixture, solution, or reaction medium may be identified as intermediate species, master batches, and the like, and may have a utility distinct from the utility of the reaction product or final material. Other subsequent changes, transformations, or reactions may result from bringing the specified reactants and/or components together under the conditions called for pursuant to this disclosure. In these other subsequent changes, transformations, or reactions, the reactants, ingredients, or the components to be brought together may identify or indicate the reaction product.

All ranges disclosed herein are inclusive of the endpoints, and the endpoints are combinable with each other. The terms "first," "second," and the like as used herein do not denote any order, quantity, or importance, but rather are used to distinguish one element from another. The use of the terms "a" and "an" and "the" and similar referents in the context of describing the invention (especially in the context of the following claims) are to be construed to cover both the singular and the plural, unless otherwise indicated herein or contradicted by context.

While the invention has been described in detail in connection with a number of embodiments, the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined in the following numbered clauses:
1. A method comprising:
   reacting a mixture comprising at least one alumina precursor, at least one silica precursor, a templating agent, and a catalytic metal precursor, to form a gel; and
   calcining the gel to form a catalyst composition comprising a pore-containing, homogeneous solid mixture which comprises at least one catalytic metal and an inorganic support comprising alumina and silica; wherein the pores of the homogenous solid mixture have an average diameter in a range of about 1 nanometer to about 200 nanometers.
2. The method of clause 1, wherein the catalytic metal comprises a transition metal.
3. The method of clause 1, wherein the catalytic metal comprises silver, platinum, gold, palladium, nickel, rhodium, or iridium.
4. The method of clause 1, wherein the catalytic metal comprises platinum.
5. The method of clause 1, wherein the catalytic metal is present in an amount less than or equal to about 6 mole percent, based on the weight of the homogenous solid mixture.
6. The method of clause 1, wherein the catalyst composition provides a conversion of at least about 20 weight percent, based on an initial amount of hydrocarbons present in a feed stream at a temperature in a range of about 275 degrees Celsius to about 425 degrees Celsius.
7. The method of clause 1, wherein the alumina precursor comprises aluminum isopropoxide, aluminum tributoxide, aluminum ethoxide, aluminum-tri-sec-butoxide, or aluminum tert-butoxide.
8. The method of clause 1, wherein the silica precursor comprises tetraethyl orthosilicate, or tetramethyl orthosilicate.
9. The method of clause 1, wherein the templating agent comprises a surfactant, a crown ether, or a cyclodextrin.
10. The method of clause 1, wherein the templating agent comprises an octylphenol ethoxylate.
11. The method of clause 1, wherein the mixture further comprises a solvent.
12. The method of clause 11, wherein the solvent comprises at least one alcohol having about 1 to about 6 carbons.
13. The method of clause 11, where in the solvent comprises iso-propanol.
14. The method of clause 1, wherein the mixture further comprises a modifier.
15. The method of clause 14, wherein the modifier is present in an amount greater than about 0.1 weight percent, based on the total weight of the mixture.
16. The method of clause 14, wherein the modifier comprises ethyl acetoacetate, ethylene glycol, or triethanolamine.
17. The method of clause 11, wherein the solvent is present in an amount greater than about 0.5 weight percent, based on the total weight of the mixture.
18. The method of clause 1, wherein the mixture further comprises at least one promoting metal.
19. The method of clause 18, wherein the at least one promoting metal comprises silver, platinum, gold, palladium, nickel, rhodium, or iridium.
20. The method of clause 1, wherein the step of reacting the mixture is carried out at a temperature in a range from about 200 degrees Centigrade to about 450 degrees centigrade.
21. The method of clause 1, wherein the alumina precursor present in the mixture is in an amount greater than about 0.1 weight percent, based on the total weight of the mixture.
22. The method of clause 1, wherein the silica precursor present in the mixture is in an amount greater than about 0.1 weight percent based on the total weight of the mixture.
23. The method of clause 1, wherein the ratio of the amount of alumina precursor present in the mixture to the amount of the silica precursor present in the mixture is in a range of about 5 : 95 to about 30 : 70..
24. The method of clause 1, wherein the templating agent is present is in an amount in a range of about 0.1 weight percent to about 45 weight percent, based on the total weight of the mixture.
25. The method of clause 1, further comprising an upgrading step which comprises upgrading a hydrocarbon feedstock to a liquid fuel in the presence of the catalyst composition.
26. A method comprising:
   upgrading a hydrocarbon feedstock to a liquid fuel in the presence of a catalyst composition, wherein the catalyst composition is formed by reacting a mixture comprising at least one alumina precursor, at least one silica precursor, a templating agent, a solvent, a catalytic metal precursor, and a modifier to transform the mixture into a gel; and
   calcining the gel to form the catalyst composition comprising a pore-containing, homogeneous solid mixture which comprises at least one catalytic metal and an inorganic support comprising alumina and silica, wherein the pores of the solid mixture have an average diameter in a range of about 1 nanometer to about 200 nanometers.
27. The method of clause 26, wherein upgrading comprises contacting a feed stream of the hydrocarbons with the catalyst composition, wherein the feed stream has a weight hourly space velocity in a range from about 0.1 kilogram of hydrocarbons per hour per kilogram of catalyst to about 10 kilograms of hydrocarbons per hour per kilogram of catalyst.
28. The method of clause 26, wherein the upgrading step comprises:
   hydro-cracking, hydro-isomerization, separation, or a combination thereof.
29. The method of clause 26, wherein upgrading the hydrocarbons is carried out at a temperature in a range between about 200 degrees Celsius and about 450 degrees Celsius.
30. The method of clause 26, wherein the hydrocarbons comprise alkanes.
31. The method of clause 26, wherein at least some of the hydrocarbons are n-paraffins.
32. The method of clause 26, wherein upgrading the hydrocarbons converts the hydrocarbons to a mixture comprising cycloalkanes, iso-paraffins and paraffins.

## Claims

1. A method comprising:
reacting a mixture comprising at least one alumina precursor, at least one silica precursor, a templating agent, and a catalytic metal precursor, to form a gel; and
calcining the gel to form a catalyst composition comprising a pore-containing, homogeneous solid mixture which comprises at least one catalytic metal and an inorganic support comprising alumina and silica; wherein the pores of the homogenous solid mixture have an average diameter in a range of about 1 nanometer to about 200 nanometers.

2. The method of claim 1, wherein the catalytic metal comprises a transition metal.

3. The method of claim 1 or claim 2, wherein the catalytic metal comprises silver, platinum, gold, palladium, nickel, rhodium, or iridium.

4. The method of claim 1, wherein the catalytic metal is present in an amount less than or equal to about 6 mole percent, based on the weight of the homogenous solid mixture.

5. The method of any preceding claim, wherein the alumina precursor comprises aluminum isopropoxide, aluminum tributoxide, aluminum ethoxide, aluminum-tri-sec-butoxide, or aluminum tert-butoxide.

6. The method of any preceding claim, wherein the silica precursor comprises tetraethyl orthosilicate, or tetramethyl orthosilicate.

7. The method of any preceding claim, wherein the templating agent comprises a surfactant, a crown ether, or a cyclodextrin.

8. The method of any preceding claim, wherein the templating agent comprises an octylphenol ethoxylate.

9. The method of any preceding claim, wherein the mixture further comprises a solvent.

10. The method of any preceding claim, wherein the mixture further comprises a modifier.

11. The method of claim 10, wherein the modifier comprises ethyl acetoacetate, ethylene glycol, or triethanolamine.

12. The method of any preceding claim, wherein the step of reacting the mixture is carried out at a temperature in a range from about 200° C to about 450° C.

13. The method of any preceding claim, further comprising an upgrading step which comprises upgrading a hydrocarbon feedstock to a liquid fuel in the presence of the catalyst composition.

14. A method comprising:
upgrading a hydrocarbon feedstock to a liquid fuel in the presence of a catalyst composition, wherein the catalyst composition is formed by reacting a mixture comprising at least one alumina precursor, at least one silica precursor, a templating agent, a solvent, a catalytic metal precursor, and a modifier to transform the mixture into a gel; and
calcining the gel to form the catalyst composition comprising a pore-containing, homogeneous solid mixture which comprises at least one catalytic metal and an inorganic support comprising alumina and silica, wherein the pores of the solid mixture have an average diameter in a range of about 1 nanometer to about 200 nanometers.

15. The method of claim 14, wherein upgrading comprises contacting a feed stream of the hydrocarbons with the catalyst composition, wherein the feed stream has a weight hourly space velocity in a range from about 0.1 kilogram of hydrocarbons per hour per kilogram of catalyst to about 10 kilograms of hydrocarbons per hour per kilogram of catalyst.
